# EUROPÄISCHE PATENTANMELDUNG

(11) **EP 0 791 943 A1**
(43) Veröffentlichungstag der Anmeldung: **27.08.1997**
(21) Anmeldenummer: 96120552.3
(22) Anmeldetag: 20.12.1996
(51) Int. Cl.: H01H 47/32

(54) **Verfahren und Anordnung zum Schalten einer Endstufe zur Ansteuerung einer elektromagnetischen Last, insbesondere für Heizwassersteuereinheiten in Kraftfahrzeugen**

(30) Priorität: 22.02.1996 DE 19606525
(71) Anmelder: Max Kammerer GmbH, 61440 Oberursel (DE)
(72) Erfinder: Jung, Jörg, 35415 Pohlheim (DE); Leipe, Armin, 65618 Niederselters (DE)
(74) Vertreter: Rassler, Andrea, Dipl.-Phys.

(57) **Zusammenfassung**

Die Erfindung betrifft ein Verfahren zum Schalten einer Endstufe zur Ansteuerung einer elektromagnetischen Last, insbesondere für Heizwassersteuereinheiten in Kraftfahrzeugen, bei welchem die Endstufe bei Erreichen einer spannungsbedingten Einschaltschwelle die Last ein- oder ausschaltet sowie eine Anordnung zur Durchführung des Verfahrens.

Um das zum Einschaltzeitpunkt durch die Last verursachte Geräusch auf ein Minimum zu beschränken, wird die Endstufe mit Hilfe eines pulsweiten modulierten Signals angesteuert.

## Beschreibung

Die Erfindung betrifft ein Verfahren zum Schalten einer Endstufe zur Ansteuerung einer elektromagnetischen Last, insbesondere für Heizwassersteuereinheiten in Kraftfahrzeugen, bei welchem die Endstufe bei Erreichen einer spannungsbedingten Einschaltschwelle die Last ein- oder ausschaltet sowie eine Anordnung zur Durchführung des Verfahrens.

Es ist üblich, das Schalten von Lasten in Verbraucherkreisen über eine Endstufe zu realisieren, die der jeweiligen Last vorgeschaltet sind.

Dabei wird durch Anlegen bzw. Abschalten einer Festspannung an der Endstufe der Last in vorgegebenen Zeitabständen die volle Leistung zugeführt, wobei die Last mit der Spannung belegt wird, die den Einschaltpunkt dieser darstellt.

In Kraftfahrzeugen werden u. a. Magnetventile in Heizwassersteuereinheiten in regelmäßigen Zeitabständen mit Hilfe einer Endstufe angesteuert. Diese Heizwassersteuereinheiten, bestehend aus Wasserpumpe und Wasserventil, sind im Aggregateraum des Fahrzeuges nahe dem Fahrgastraum angeordnet.

Aufgrund dieser Anordnung ist beim Anziehen der Last, was regelmäßig im entsprechenden Steuertakt erfolgt, ein relativ lautes Einschaltgeräusch zu vernehmen, welches von den Insassen des Fahrgastraumes als störend empfunden wird.

Der Erfindung liegt somit die Aufgabe zugrunde, ein Verfahren anzugeben, bei welchem der zum Einschaltzeitpunkt durch die Last verursachte Geräuschpegel auf ein Minimum beschränkt wird.

Erfindungsgemäß wird die Aufgabe dadurch gelöst, daß die Ansteuerung der Endstufe mit Hilfe eines pulsweitenmodellierten Signals erfolgt.

Der Vorteil der Erfindung besteht darin, daß durch die PWM-Steuerung die Betriebsspannung langsam an den Einschaltpunkt der Last herangezogen wird und nur soweit magnetische Energie durch das PWM-Signal zugeführt wird, wie für diesen Vorgang notwendig ist.

Das bisher bekannte Einschaltgeräusch der Last, welches auf die Umwandlung von überschüssiger magnetischer Energie in mechanische Energie zurückzuführen ist, unterbleibt durch diese Art des gleitenden Einschaltens. Im Augenblick des Einschaltmomentes des Elektromagnetventiles ist ein minimierter Geräuschpegel vernehmbar.

Durch das gleitende Einschalten ist es auch möglich, daß Herstellungstoleranzen der Last ebenfalls geschaltet werden. Der Ansteuerzeitraum der Endstufe ist dabei der Taktzeit der Last vorgelagert und dieser angepaßt.

Die Last wird über einen pulsweitenmodulierten gesteuerten Startzeitraum eingeschaltet. Das bedeutet, daß die Betriebsspannung langsam an den Einschaltpunkt der Last herangeführt wird.

In einer Weiterbildung ist der Ansteuerzeitraum der Endstufe konstant. Das Vorschalten der PWM-Steuerung gewährleistet gleiche Taktzeiten der Last (Ein- bzw. Ausschaltpunkte der Last).

Zur Realisierung des erfindungsgemäßen Verfahrens wird die Last über eine Endstufe durch einen Mikroprozessor angesteuert.

Aufgrund der Verwendung eines Mikrocomputers ist es möglich, das erfindungsgemäße Verfahren ohne erhöhten Meß- und Schaltungsaufwand durchzuführen.

Die Erfindung läßt zahlreiche Ausführungsformen zu. Eine davon soll anhand der in der Zeichnung dargestellten Figuren näher erläutert werden.

Es zeigt:
- Fig. 1:: schematische Darstellung eines Heizwassersystems in einem Kraftfahrzeug.
- Fig. 2:: Anordnung zur Ansteuerung einer Last
- Fig. 3:: Prinzipdarstellung des erfindungsgemäßen Verfahrens

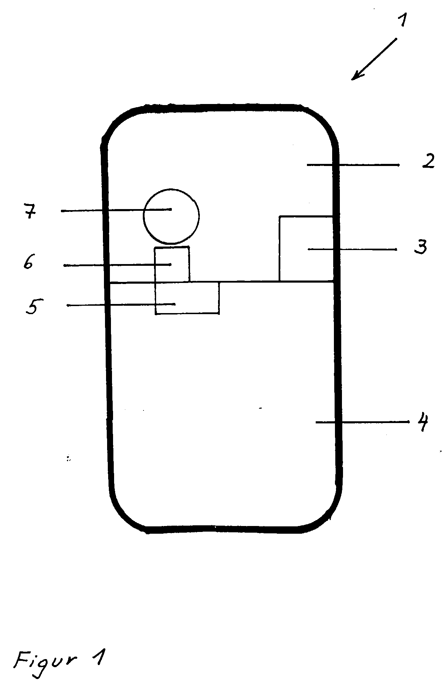

In Figur 1 ist die Anordnung einer Heizwassersteuereinheit 3 im Motorraum 2 eines Kraftfahrzeuges 1 dargestellt. Die Heizwassersteuereinheit 3 besteht dabei aus weiter nicht dargestellten Wasserpumpen und Wasserventilen. Mit Hilfe einer in der Fahrgastzelle 4 des Kraftfahrzeuges 1 angeordneten Steuerelektronik 5, die mit der Heizwassersteuereinheit 3 elektrisch verbunden ist, wird das Ein- und Ausschalten des Wasserventils und somit die Durchflußmenge des Wassers in einem Wärmetauscher 6 gesteuert. Dabei ist der Wärmetauscher 6 am Motor 7 angeordnet.

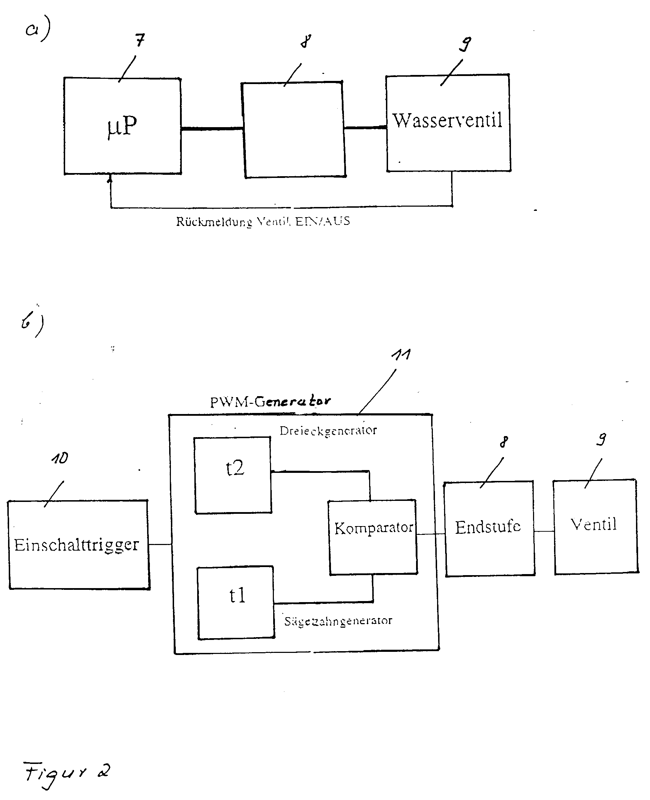

Die Steuerelektronik 5 besteht gemäß Figur 2a aus einem Mikroprozessor 7, welcher das Puls-Pausen-Verhältnis des Eingangssignals U des Wasserventils 9 erzeugt. Zwischen dem Mikroprozessor 7 und dem elektromagnetischen Wasserventil 9 ist eine Endstufe 8 geschaltet. Zwischen dem Wasserventil 9 und dem Mikroprozessor 7 besteht eine Rückkopplung, über welche dem Mikroprozessor mitgeteilt wird, ob das Wasserventil ein- oder ausgeschaltet ist.

In Figur 2b ist eine Möglichkeit zur hardwaremäßigen Ralisierung eines pulsweitenmodulierten Ansteuersignals für das Wasserventil 9 dargestellt. Das PWM-Signal wird mittels eines Generators 11 erzeugt, welcher über einen Trigger 10 ein- und ausgeschaltet wird.

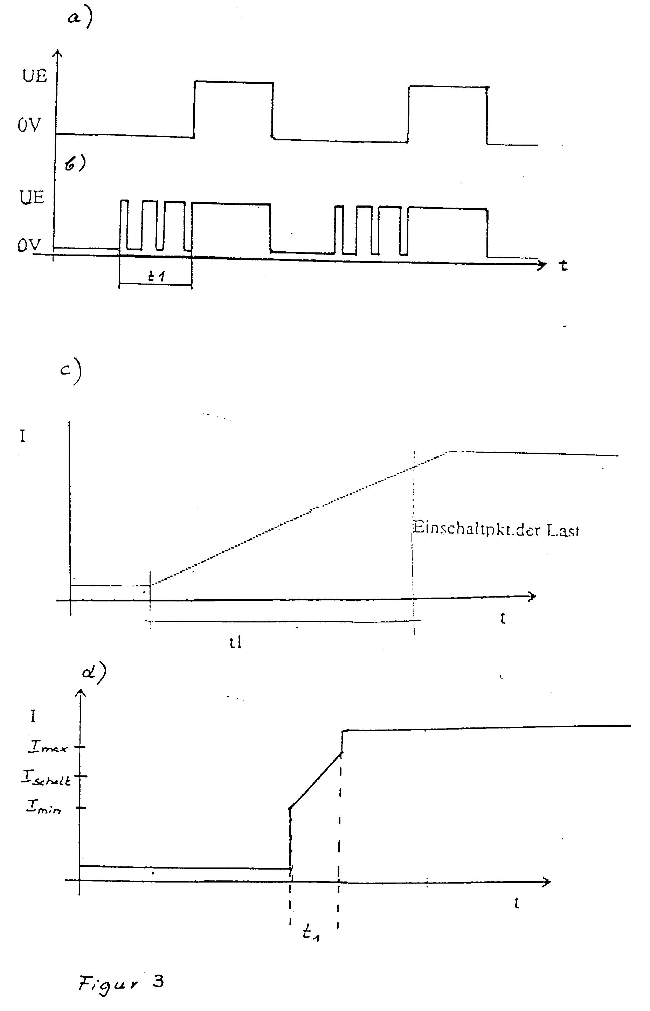

Das Verfahren nach dem Stand der Technik ist in Figur 3a dargestellt. Im gleichen Takt wird dabei die volle Leistung an das Wasserventil angelegt.

Dies führt, wie bereits beschrieben, zum Auftreten des unangenehmen Geräusches, welches daraus resultiert, daß überschüssige magnetische Energie umgewandelt wird.

Bei dem erfindungsgemäßen Verfahren ist dem Einschaltpunkt des Wasserventils 8 ein konstanter Startzeitraum t₁ vorgelagert, in welchem ein pulsweitenmoduliertes Spannungssignal U anliegt. Durch diese Ansteuerung wird die Betriebsspannung langsam an den Einschaltpunkt U_{E} des Wasserventils 9 herangeführt.

Da der Betriebsstrom (Fig. 3c, d) des Wasserventils 9 linear ansteigt, ist bei einer bestimmten Leistung Px das Wasserventil 9 eingeschaltet. Bei dieser PWM-Ansteuerung ist nur der Zeitpunkt des Einschaltens betriebsspannungsabhängig. Die Einschaltschwelle bleibt immer konstant.

Es ist nicht immer notwendig die Schrittweite des pulsweitenmodulierten Signals zwischen 0 und 100 % (Fig. 3c) zu wählen. Je nach Art der Last kann eine Schrittweite zwischen 50 u. 80 % gewählt werden, die einen minimalen Geräuschpegel beim Einschalten der Last gewährleistet.

Gemäß Fig. 3d wird die Pulsweite so gewählt, daß der Betriebsstrom im Startzeitraum t₁ sich zwischen zwei Werten Iₘᵢₙ und Iₘₐₓ bewegt. In diesem Intervall liegt dann die Einschaltschwelle I_{Schalt} des Magnetventils.

## Patentansprüche

1. Verfahren zum Schalten einer Endstufe zur Ansteuerung einer elektromagnetischen Last, insbesondere für Heizwassersteuereinheiten in Kraftfahrzeugen, bei welchem die Endstufe bei Erreichen einer spannungsbedingten Einschaltschwelle die Last ein- oder ausschaltet, **dadurch gekennzeichnet**, daß die Ansteuerung der Endstufe mit Hilfe eines pulsweitenmodulierten Signals erfolgt.

2. Verfahren nach Anspruch 1, **dadurch gekennzeichnet**, daß die Ansteuerung der Endstufe in einem Zeitraum (t₁) vor dem Einschaltpunkt der Last erfolgt.

3. Verfahren nach Anspruch 2, **dadurch gekennzeichnet**, daß der Ansteuerzeitraum (t₁) der Endstufe einer Taktzeit der Last vorgelagert wird.

4. Verfahren nach Anspruch 2 oder 3, **dadurch gekennzeichnet**, daß der Ansteuerzeitraum (t₁) konstant ist.

5. Verfahren nach einem der vorhergehenden Ansprüche, **dadurch gekennzeichnet**, daß das pulsweitenmodulierte Signal lastabhängig eingestellt wird.

6. Anordnung zur Durchführung des Verfahrens nach Anspruch 1, **dadurch gekennzeichnet**, daß die Last über eine Endstufe durch einen Mikroprozessor ansteuerbar ist.
